# EUROPÄISCHE PATENTSCHRIFT

(11) **EP 4 212 214 B1**
(45) Veröffentlichungstag und Bekanntmachung des Hinweises auf die Patenterteilung: **28.10.2026**
(21) Anmeldenummer: 22214826.4
(22) Anmeldetag: 20.12.2022
(51) Int. Cl.: A62B 23/02

(54) **FILTEREINHEIT MIT EINEM FILTERBLOCK, EINER DÄMPFUNGSLAGE UND EINEM GEHÄUSE SOWIE VERFAHREN ZUR HERSTELLUNG EINER SOLCHEN FILTEREINHEIT**
FILTER UNIT COMPRISING A FILTER BLOCK, A DAMPING LAYER AND A HOUSING AND METHOD FOR PRODUCING SUCH A FILTER UNIT
UNITÉ DE FILTRATION COMPRENANT UN BLOC FILTRANT, UNE COUCHE D'AMORTISSEMENT ET UN BOÎTIER, ET PROCÉDÉ DE FABRICATION D'UNE TELLE UNITÉ DE FILTRATION

(30) Priorität: 13.01.2022 DE 102022100690
(43) Veröffentlichungstag der Anmeldung: 19.07.2023
(73) Patentinhaber: Dräger Safety AG & Co. KGaA, 23560 Lübeck (DE)
(72) Erfinder: Brandenburg, Benjamin, 23558 Lübeck (DE); Erhardt, Tim, 23558 Lübeck (DE); Lorenzen, Ludwig, 23558 Lübeck (DE)
(74) Vertreter: Meyer-Gramann, Klaus Dieter

(56) Entgegenhaltungen:
- EP-A2- 3 928 839
- WO-A1-2017/021470
- WO-A2-2015/069355

## Beschreibung

Die Erfindung betrifft eine Filtereinheit mit einem Topf, einem starren Filterblock im Topf und einer einstückigen verformbaren Dämpfungslage zwischen dem Topf und dem Filterblock. Weiterhin betrifft die Erfindung ein Verfahren zum Herstellen einer solchen Filtereinheit.

Eine Filtereinheit mit einem starren Filterblock lässt sich beispielsweise als Bestandteil einer Atemschutzmaske oder eines Atemschutzgeräts verwenden. Ein Benutzer trägt diese Atemschutzmaske oder dieses Atemschutzgerät, wenn er sich in einer Umgebung aufhält, in der die Umgebungsluft mit Schadstoffen und / oder Partikeln angereichert ist oder sein kann. Der Benutzer atmet Umgebungsluft ein, oder Umgebungsluft wird zum Benutzer gefördert. Die Filtereinheit filtert aus der eingeatmeten oder geförderten Umgebungsluft die Schadstoffe und / oder Partikel heraus, sodass das Risiko verringert wird, dass der Benutzer durch die Umgebungsluft einen gesundheitlichen Schaden erleidet. Eine derartige Filtereinheit lässt sich auch dafür verwenden, um die Luft in einem Raum oder Frischluft, die einem Verbrennungsmotor zugeführt wird, zu filtern.

In DE 10 2015 012 410 B4 wird eine Filtereinheit mit einem starren Filterblock beschrieben. Verschiedene mögliche Materialien, aus denen der starre Filterblock gefertigt ist, sowie mögliche Imprägnierungen des Filterblocks werden beschrieben.

In EP 3 928 839 A2 wird die Mantelfläche eines starren Filterblocks der Filtereinheit von einer flexiblen Ummantelung umgeben.

Der Erfindung liegt die Aufgabe zugrunde, eine Filtereinheit mit einem starren Filterblock bereitzustellen, bei welcher die Gefahr geringer als bei bekannten derartigen Filtereinheiten ist, dass der Filterblock bei einem Einsatz der Filtereinheit beschädigt wird. Weiterhin liegt der Erfindung die Aufgabe zugrunde, ein Verfahren zur Herstellung einer solchen Filtereinheit anzugeben, bei welchem die Gefahr geringer ist, dass der starre Filterblock bei der Herstellung beschädigt wird.

Die Aufgabe wird durch eine Filtereinheit mit den Merkmalen des Anspruchs 1 und durch ein Herstellungsverfahren mit den Merkmalen des Anspruchs 10 gelöst. Vorteilhafte Ausgestaltungen sind in den Unteransprüchen angegeben. Vorteilhafte Ausgestaltungen des erfindungsgemäßen Herstellungsverfahrens sind, soweit sinnvoll, auch vorteilhafte Ausgestaltungen der erfindungsgemäßen Filtereinheit und umgekehrt.

Die erfindungsgemäße Filtereinheit umfasst einen Topf mit einem Boden und einer Röhre sowie einen Deckel. Die Röhre hat insbesondere die Form eines Zylinders oder eines Kegelstumpfs oder Pyramidenstumpfs. Der Boden ist eben und hat bevorzugt die Form einer Scheibe, besonders bevorzugt einer kreisrunden oder elliptischen Scheibe. Der Topf und der Deckel bilden zusammen ein Gehäuse der Filtereinheit, bevorzugt ein starres Gehäuse. Bevorzugt ist der Deckel fest mit dem Topf verbunden. Bevorzugt ist in den Deckel eine Durchströmöffnung eingelassen, und in den Boden des Topfs ist ebenfalls eine Durchströmöffnung eingelassen.

Weiterhin umfasst die erfindungsgemäße Filtereinheit einen starren Filterblock mit zwei Stirnflächen und einer Mantelfläche. Der starre Filterblock kann insbesondere die Form eines Zylinders oder eines Kegelstumpfs oder einer Säule mit einem elliptischen oder n-eckigen Querschnitt aufweisen. Die Mantelfläche erstreckt sich von der einen Stirnfläche zu der anderen Stirnfläche. Das Merkmal "starr" bedeutet, dass der Filterblock sich gar nicht oder wenigstens nicht in nennenswertem Maße reversibel verformen kann.

Das Gehäuse mit dem Topf und dem Deckel umgibt diesen starren Filterblock, und zwar bevorzugt vollständig. Zwischen der Röhre des Topfs und der Mantelfläche des starren Filterblocks tritt ein umlaufender Spalt auf. Bevorzugt ist der starre Filterblock zentriert im Topf eingesetzt, d.h. eine Mittelachse des Filterblocks und eine Mittelachse des Topfs stimmen überein. Möglich ist aber auch, dass zwischen diesen beiden Mittelachsen ein Abstand und / oder ein Winkel auftritt, beispielsweise aufgrund von Ungenauigkeiten bei der Fertigung oder um einen Raum zwischen dem Topf und dem Filterblock für einen Eingriff durch einen Menschen oder Handhabungsautomaten bereitzustellen.

Die erfindungsgemäße Filtereinheit umfasst weiterhin eine einstückige verformbare Dämpfungslage. Diese Dämpfungslage umfasst einen ebenen inneren Bereich und einen geriffelten äußeren Bereich. Der ebene innere Bereich hat die Form eines Kreises oder einer Ellipse oder eines n-Ecks. Der geriffelte äußere Bereich umgibt den ebenen inneren Bereich nach Art eines Kreisrings, bevorzugt vollständig. Die Außenkontur des äußeren Bereichs hat insbesondere die Form eines Kreises oder einer Ellipse. Der äußere Bereich ist mit dem inneren Bereich umlaufend verbunden. Anschaulich gesprochen hat die Dämpfungslage die Form eines Kaffeefilters aus Papier. Der ebene innere Bereich befindet sich zwischen der einen Stirnfläche des Filterblocks und dem Boden des Topfs. Bevorzugt ist diese eine Stirnfläche, an die der innere Bereich angrenzt, die ausströmseitige Stirnfläche. Der geriffelte äußere Bereich befindet sich im Spalt zwischen der Röhre und der Mantelfläche.

Wie gerade dargelegt, befindet sich der innere Bereich der Dämpfungslage zwischen der einen Stirnfläche des Filterblocks und dem Boden des Topfs. Die andere Stirnfläche des Filterblocks grenzt an den Deckel an. Diese andere Stirnfläche ist bevorzugt die einströmseitige Stirnfläche.

Der starre Filterblock vermag aus einem Gasgemisch, welches durch den starren Filterblock strömt, mindestens ein Gas und / oder Partikel herauszufiltern. Bevorzugt ist die Filtereinheit so ausgestaltet, dass keine nennenswerte Menge des Gasgemischs zwar durch das Gehäuse, aber um den Filterblock herum anstelle durch den Filterblock hindurch fließen kann. Vielmehr wird das Gasgemisch auf einen Weg durch den starren Filterblock hindurch gezwungen. Dies wird besonders bevorzugt dadurch erreicht, dass der Spalt zwischen der Röhre des Topfs und dem starren Filterblock durch ein umlaufendes Dichtungselement abgedichtet ist. Bevorzugt absorbiert oder adsorbiert der Filterblock das Gas und / oder die Partikel. Bevorzugt fließt das Gasgemisch mindestens einmal von der einströmseitigen Stirnfläche zu der ausströmseitigen Stirnfläche des Filterblocks, während das Gasgemisch durch die Filtereinheit strömt.

Die erfindungsgemäße Filtereinheit umfasst einen starren Filterblock. In vielen Fällen übt dieser starre Filterblock einen geringeren pneumatischen Widerstand auf ein durchströmendes Gasgemisch aus als ein anders ausgestalteter Filterblock mit ähnlicher Filterleistung. Dies ist insbesondere dann von Bedeutung, wenn ein Mensch die Filtereinheit benutzt, um gefilterte Atemluft einzuatmen, und hierfür ausschließlich seine eigene Atmungsmuskulatur verwendet. Der Filterblock reduziert bei dieser Anwendung den Atemwiderstand, der erforderlich ist, um Atemluft anzusaugen und einzuatmen. Der relativ geringe pneumatische Widerstand ist auch dann von Vorteil, wenn eine Fördereinheit das Gasgemisch fördert, beispielsweise ansaugt.

Bei vielen möglichen Realisierungsformen einer Filtereinheit kann von einem starren Filterblock ein Teil abbrechen, oder der starre Filterblock kann sogar zerbrechen, wenn die Filtereinheit mechanischen Einwirkungen von außen ausgesetzt ist. Diese unerwünschte Beschädigung kann insbesondere dann auftreten, wenn die Filtereinheit auf den Boden fällt oder Vibrationen ausgesetzt ist oder wenn ein Mensch, der die Filtereinheit vor seinem Gesicht trägt, den Kopf bewegt und dadurch die Filtereinheit gegen einen Gegenstand stößt. Die erfindungsgemäße verformbare Dämpfungslage reduziert diese Gefahr einer mechanischen Beschädigung. Die Dämpfungslage vermag nämlich kinetische Energie aufzunehmen und zu absorbieren, welche von außen auf die Filtereinheit einwirkt. In vielen Fällen überbrückt der geriffelte äußere Bereich die gesamte Breite des Spalts. In vielen Fällen kann die Dämpfungslage sich im Gegensatz zum starren Filterblock reversibel verformen und dadurch kinetische Energie aufnehmen.

Der innere Bereich der verformbaren Dämpfungslage befindet sich zwischen einer Stirnfläche des Filterblocks und dem Boden des Topfs, der äußere Bereich zwischen der Mantelfläche und der Röhre. Daher vermag die Dämpfungslage in vielen Fällen sowohl kinetische Energie aufgrund eines Impulses parallel zur Mittelachse des Filterblocks als auch aufgrund eines Impulses senkrecht oder schräg zu dieser Mittelachse zu absorbieren.

Der geriffelte äußere Bereich vermag aufgrund der Riffelung in vielen Fällen mehr kinetische Energie aufzunehmen als ein ebener Bereich. Trotzdem erfordert der äußere Bereich nur unwesentlich mehr Platz im Topf als ein ebener Bereich. Der ebene innere Bereich ist in vielen Fällen mechanisch stabiler und insbesondere rissfester als ein geriffelter Bereich. In eine Richtung senkrecht auf die Ebene, in der der innere Bereich sich erstreckt, nimmt der ebene innere Bereich weniger Platz ein, als wenn auch der innere Bereich geriffelt wäre. Der Boden des Topfs, der ebene innere Bereich und die eine Stirnfläche des Filterblocks können parallel zueinander angeordnet sein und unmittelbar, also ohne nennenswerten Abstand, aneinander angrenzen.

Zwischen der Mantelfläche des Filterblocks und der Röhre des Topfs tritt ein Spalt auf, bevorzugt ein umlaufender röhrenförmiger Spalt. Dank dieses Spalts ist es nicht erforderlich, den Filterblock und den Topf dergestalt herzustellen, dass die tatsächlichen Abmessungen des Filterblocks und des Topfs genau mit jeweils vorgegebenen Soll-Abmessungen übereinstimmen und der Filterblock genau zentriert im Topf positioniert wird. Der geriffelte Bereich füllt diesen Spalt wenigstens teilweise aus und kann sich an die Abmessungen des Filterblocks und der Röhre und an die Position des Filterblocks relativ zur Röhre anpassen. Der geriffelte Bereich kann somit bis zu einem gewissen Grad Ungenauigkeiten bei der Herstellung der Bestandteile und dem Zusammenbau der Filtereinheit sowie bei der Positionierung des Filterblocks im Topf kompensieren.

In einer Realisierungsform umfasst der starre Filterblock Aktivkohle, die optional imprägniert ist. Bevorzugt ist eine Vielzahl von Kanälen durch den starren Filterblock hindurchgeführt, wobei jeder Kanal die beiden Stirnflächen miteinander verbindet und wobei die Kanäle untereinander nicht verbunden sind. Diese Ausgestaltung führt in vielen Fällen zu einem besonders geringen Atemwiderstand oder einem besonders geringen sonstigen pneumatischen Widerstand sowie zu einer guten Absorptionswirkung.

In der Regel strömt das Gasgemisch mindestens einmal von der einströmseitigen Stirnfläche in eine Fließrichtung durch den starren Filterblock hindurch zu der ausströmseitigen Stirnfläche, optional mehrmals von der einen Stirnfläche zu der anderen Stirnfläche. Der Filterblock hat eine Ausdehnung entlang dieser Fließrichtung. Diese Ausdehnung ist der maximale Abstand zwischen den beiden Stirnflächen des Filterblocks. Der geriffelte äußere Bereich weist eine Breite auf. Falls der äußere Bereich die Form eines Kreisrings hat, so ist die Breite des äußeren Bereichs der Radius dieses Kreisrings, also die Differenz zwischen dem Radius des geriffelten äußeren Bereichs und dem Radius des ebenen inneren Bereichs. Bevorzugt ist die Breite des äußeren Bereichs kleiner als die Ausdehnung des Filterblocks entlang der Fließrichtung, also kleiner als der maximale Abstand zwischen den beiden Stirnflächen des Filterblocks, und kleiner als die Abmessung des Topfs entlang seiner Mittelachse. Diese Ausgestaltung erleichtert es, die erfindungsgemäße Filtereinheit herzustellen und bei der Herstellung die Dämpfungslage in den Topf einzusetzen. Der eingesetzte äußere Bereich steht nicht über den Topf und auch nicht über den eingesetzten Filterblock über, und zwar auch dann nicht, wenn Ungenauigkeiten bei der Fertigung oder Positionierung vorliegen. Zwischen dem Deckel und der Dämpfungslage tritt gemäß der bevorzugten Ausgestaltung ein Abstand auf. Dies erleichtert es in vielen Fällen, den Deckel fluiddicht mit dem Topf zu verbinden.

Erfindungsgemäß grenzt der innere Bereich der Dämpfungslage an eine Stirnfläche des starren Filterblocks an. Bevorzugt befindet dieser innere Bereich der Dämpfungslage sich zwischen dieser Stirnfläche des Filterblocks und dem Boden des Topfs. Diese Stirnfläche ist bevorzugt die ausströmseitige Stirnfläche. Dadurch erreicht nur ein gefiltertes Gasgemisch den inneren Bereich, und die Gefahr ist geringer, dass der innere Bereich sich zusetzt.

Bevorzugt ist in den Boden des Topfs eine Koppeleinheit eingelassen, die mit einer Durchströmöffnung im Boden überlappt. Diese Koppeleinheit ist fluiddicht mit dem Boden des Topfs verbunden. Dank der Koppeleinheit lässt die Filtereinheit sich lösbar mit einem Filtereinheit-Träger verbinden, beispielsweise mit einer Gesichtsmaske. Beispielsweise greift ein Außengewinde der Koppeleinheit in ein Innengewinde des Filtereinheit-Trägers ein oder umgekehrt. Möglich ist auch, dass die Koppeleinheit einen Bajonettverschluss oder einen Schnappverschluss oder einen Rastverschluss umfasst. Weil die Koppeleinheit in den Boden eingesetzt ist, ist die Filtereinheit mechanisch stabiler, als wenn die Koppeleinheit in den Deckel eingesetzt ist. Der Boden ist nämlich starr und starr mit der Röhre des Topfs verbunden.

Der innere Bereich der Dämpfungslage weist eine maximale Abmessung auf. Falls der innere Bereich die Form eines Kreises hat, so ist diese maximale Abmessung der Durchmesser des Kreises. Diese maximale Abmessung des inneren Bereichs ist bevorzugt größer als die maximale Abmessung der angrenzenden Stirnfläche des Filterblocks. Falls sowohl der innere Bereich als auch die angrenzende Stirnfläche jeweils die Form eines Kreises haben, ist der Durchmesser des inneren Bereichs größer als der Durchmesser der angrenzenden Stirnfläche. Weiterhin ist bevorzugt die maximale Abmessung des inneren Bereichs höchstens so groß wie, bevorzugt kleiner als die maximale Abmessung des Bodens des Topfs. Diese Ausgestaltung erleichtert es, bei der Herstellung der Filtereinheit den inneren Bereich der Dämpfungslage so im Topf zu platzieren, dass der innere Bereich plan und ohne Falten oder Riffelungen oder Knicke am Boden anliegt. Dies erhöht die mechanische Stabilität und insbesondere die Rissfestigkeit der Dämpfungslage.

**In** einer Fortbildung dieser Ausgestaltung ist im Spalt zwischen der Röhre des Topfs und der Mantelfläche des Filterblocks ein umlaufendes Dichtungselement angeordnet. Möglich ist, dass das Dichtungselement stoffschlüssig mit dem starren Filterblock verbunden ist. Zwischen diesem Dichtungselement und der Dämpfungslage tritt bevorzugt ein Abstand auf. Bevorzugt befindet das Dichtungselement sich zwischen der Dämpfungslage und dem Deckel. Bevorzugt tritt auch zwischen dem Deckel und dem Dichtungselement ein Abstand auf. Das Dichtungselement kann auch stoffschlüssig mit dem äußeren Bereich der Dämpfungslage verbunden sein. Dieses Dichtungselement reduziert weiter die Gefahr, dass eine unerwünschte Bewegung des Filterblocks relativ zum Topf auftritt. Bevorzugt ist das Dichtungselement reversibel verformbar und vermag daher ebenfalls kinetische Energie zu absorbieren. Außerdem dichtet dieses Dichtungselement bis zu einem gewissen Grad den Spalt ab. Das Dichtungselement reduziert die Gefahr, dass ein Teil des Gasgemischs, welches durch die Filtereinheit fließt, den Filterblock umgeht.

Bevorzugt umfasst die Filtereinheit zusätzlich einen Partikelfilter, der gesehen in die Fließrichtung eines Gasgemischs durch die Filtereinheit flussaufwärts von dem Filterblock angeordnet ist. Dieser Partikelfilter grenzt bevorzugt an diejenige Stirnfläche des Filterblocks an, die zum Deckel hin zeigt, kann aber auch in den Deckel integriert sein. Weil der Partikelfilter flussaufwärts vom Filterblock angeordnet ist, erreichen weniger Partikel, idealerweise überhaupt keine Partikel, den Filterblock und können den Filterblock zusetzen. Bevorzugt ist der Partikelfilter gewellt oder plissiert, um seine Oberfläche verglichen mit einem ebenen Partikelfilter zu vergrößern, ohne die Abmessung des Partikelfilters senkrecht zur Fließrichtung des Gasgemischs wesentlich zu vergrößern. Möglich ist auch, dass der Partikelfilter plan ist oder mehrere plane einzelne Lagen umfasst.

In einer Ausgestaltung umfasst die Filtereinheit zusätzlich eine weitere verformbare Dämpfungslage, insbesondere eine Vliesscheibe, die ebenfalls flussaufwärts vom starren Filterblock angeordnet ist. Der Filterblock befindet sich zwischen der weiteren Dämpfungslage und dem inneren Bereich der verformbaren Dämpfungslage. Diese Ausgestaltung führt noch besser dazu, dass eine Bewegung des Filterblocks relativ zum Gehäuse reduziert wird. Bevorzugt grenzt eine Stirnfläche des Filterblocks an die Dämpfungslage an und die gegenüberliegende Stirnfläche an die weitere Dämpfungslage, so dass der starre Filterblock sich zwischen zwei verformbaren Dämpfungslagen befindet.

Die Erfindung betrifft weiterhin ein Atemschutzgerät, welches mindestens eine erfindungsgemäße Filtereinheit sowie einen Filtereinheits-Träger umfasst, optional mindestens zwei Filtereinheiten, von denen mindestens eine erfindungsgemäß ausgestaltet ist. Der Filtereinheits-Träger kann am Kopf eines Menschen anliegen und beispielsweise eine Gesichtsmaske und eine Bebänderung umfassen. Die oder jede erfindungsgemäße Filtereinheit ist lösbar mit dem Filtereinheits-Träger verbunden oder lässt sich lösbar verbinden. Beispielsweise umfasst die Filtereinheit ein Außengewinde, und der Filtereinheits-Träger umfasst ein korrespondierendes Innengewinde - oder umgekehrt. Möglich ist auch, dass die oder jede Filtereinheit mithilfe eines Bajonettverschlusses oder Rastverschlusses oder Schnappverschlusses mit dem Filtereinheit-Träger verbunden wird. Bevorzugt zeigt der jeweilige Boden der oder jeder Filtereinheit zu dem Filtereinheits-Träger hin, wenn die Filtereinheit mit dem Filtereinheits-Träger verbunden ist. Das Atemschutzgerät kann als eine Atemschutzmaske ausgestaltet sein.

Optional umfasst das Atemschutzgerät zusätzlich eine Förderereinheit, beispielsweise ein Gebläse oder eine Pumpe, welche Umgebungsluft ansaugt und zu der oder einer Filtereinheit hin fördert.

Verschiedene Verfahren sind möglich, um eine erfindungsgemäße Filtereinheit herzustellen. Ein bevorzugtes Herstellungsverfahren umfasst die folgenden Schritte:
- Ein bevorzugt starrer Topf mit einem Boden und einer Röhre wird bereitgestellt. Die Röhre erstreckt sich entlang einer Mittelachse. Bevorzugt ist in den Boden des Topfes eine Durchströmöffnung eingelassen.
- Ein starrer Deckel wird bereitgestellt. Optional ist in oder an diesem Deckel ein Partikelfilter befestigt. Bevorzugt ist in eine Stirnfläche des Deckels eine Durchströmöffnung eingelassen.
- Ein starrer Filterblock mit zwei Stirnflächen und einer Mantelfläche zwischen den beiden Stirnflächen wird bereitgestellt. Der starre Filterblock erstreckt sich entlang einer Mittelachse. Die maximale Abmessung mindestens einer Stirnfläche in einer Ebene, die senkrecht auf der Mittelachse des Filterblocks steht, ist kleiner als der minimale Durchmesser der Röhre des Topfs. Falls die Röhre und der Filterblock jeweils die Form eines Kegelstumpfs haben, kann der Durchmesser der größeren Stirnfläche des Filterblocks größer sein als der minimale Durchmesser der Röhre.
- Eine verformbare einstückige Dämpfungslage in Form eines ebenen Gegenstands wird bereitgestellt. Dieser Gegenstand hat bevorzugt die Form einer kreisförmigen oder elliptischen Scheibe. Die minimale Abmessung dieses Gegenstands in der Ebene, in der sich der ebene Gegenstand erstreckt, ist größer als die minimale Abmessung der Röhre in einer Ebene, die senkrecht auf der Mittelachse der Röhre steht. Die verformbare Dämpfungslage ist so ausgestaltet, dass sie kinetische Energie aufzunehmen vermag.
- In einen äußeren Bereich der verformbaren Dämpfungslage wird eine umlaufende Abfolge von Riffeln eingestanzt. Dadurch wird der äußere Bereich geriffelt, während der innere Bereich eben bleibt. Der geriffelte äußere Bereich umgibt den ebenen inneren Bereich nach Art eines Kreisrings. Bevorzugt umgibt der äußere Bereich vollständig den inneren Bereich.
- Die verformbare Dämpfungslage wird auf den Topf aufgesetzt oder aufgelegt.
- Die aufgesetzte oder aufgelegte verformbare Dämpfungslage wird in das Innere des Topfs hinein und auf den Boden zu bewegt. Dieser Vorgang lässt sich mit dem Vorgang vergleichen, einen Kaffeefilter von oben in eine Aufnahme einer Kaffeemaschine einzusetzen. Der geriffelte äußere Bereich grenzt an die Röhre des Topfs an.
- In einer Ausgestaltung wird die Dämpfungslage vollständig in den Topf hinein bewegt. Nach dieser Bewegung grenzt der ebene innere Bereich der Dämpfungslage an den Boden des Topfs an. In einer anderen Ausgestaltung wird die Dämpfungslage lediglich auf den Topf aufgesetzt oder nur teilweise in den Topf hinein bewegt, sodass ein Abstand zwischen dem ebenen inneren Bereich der Dämpfungslage und dem Boden des Topfs verbleibt. In der Regel steht der äußere Bereich der Dämpfungslage noch über den Topf über. Durch den nächsten Verfahrensschritt wird die Dämpfungslage vollständig in den Topf hineingeschoben.
- Der starre Filterblock wird in das Innere des Topfs bewegt, und zwar mit einer Stirnfläche voraus. Diese Stirnfläche wird nachfolgend als die vordere Stirnfläche bezeichnet, die andere Stirnfläche als die hintere Stirnfläche. Der innere Bereich der Dämpfungslage befindet sich zwischen der vorderen Stirnfläche des Filterblocks und dem Boden des Topfs. Bevorzugt ist die Bewegungsrichtung des Filterblocks parallel zur Mittelachse des Filterblocks. In einer Ausgestaltung grenzt die vordere Stirnfläche des Filterblocks an den inneren Bereich an und schiebt die verformbare Dämpfungslage vollständig in den Topf hinein. Der äußere Bereich der Dämpfungslage wird hierbei relativ zum inneren Bereich vom Boden des Topfs weg gedreht. Dieser Vorgang lässt sich mit dem Vorgang vergleichen, dass Kaffeepulver in einen Kaffeefilter hineingeschüttet wird und dank der Schwerkraft den Kaffeefilter nach unten in die Aufnahme drückt. Während und auch nach dieser Bewegung befindet der innere Bereich der Dämpfungslage sich zwischen dem Boden des Topfs und der vorderen Stirnfläche.
- Nach der Bewegung grenzt der innere Bereich der Dämpfungslage an den Boden des Topfs an, und die vordere Stirnfläche des Filterblocks grenzt an den inneren Bereich an. Während und auch nach der Bewegung befindet der äußere Bereich der Dämpfungslage sich in einem Spalt, der zwischen der Röhre des Topfs und der Mantelfläche des Filterblocks auftritt.
- Optional wird der Spalt mit einer Dichtmasse verfüllt, die bevorzugt aushärtet und ein umlaufendes Dichtungselement bildet.
- Optional wird auf die hintere Stirnfläche des Filterblocks ein Partikelfilter aufgesetzt oder aufgelegt. Bevorzugt wird der Partikelfilter aufgesetzt oder aufgelegt, nachdem der starre Filterblock in das Innere des Topfs bewegt worden ist.
- Optional wird auf die hintere Stirnfläche des Filterblocks eine verformbare weitere Dämpfungslage, insbesondere eine Vliesscheibe, aufgesetzt. Bei einer Verformung absorbiert die weitere Dämpfungslage kinetische Energie.
- Der Deckel wird mechanisch mit dem Topf verbunden. Nach Herstellung dieser Verbindung bilden der Deckel und der Topf zusammen ein Gehäuse, bevorzugt ein starres Gehäuse. Dieses Gehäuse umgibt den Filterblock und die Dämpfungslage, bevorzugt vollständig und fluiddicht bis auf eine einströmseitige Öffnung und eine ausströmseitige Öffnung.

Bei diesem Herstellungsverfahren ist die Gefahr relativ gering, dass der starre Filterblock während der Herstellung beschädigt wird, verglichen mit anderen möglichen Herstellungsverfahren. Außerdem wird mit relativ hoher Zuverlässigkeit erreicht, dass nach der Herstellung der Filterblock, die Dämpfungslage und der Topf relativ zueinander jeweils eine gewünschte Position haben. In vielen Fällen bewirkt die bereits vollständig oder wenigstens teilweise eingesetzte oder aufgesetzte Dämpfungslage, dass der Filterblock geführt und zentriert wird, während der Filterblock in den Topf hinein bewegt wird.

Gemäß dem bevorzugten Herstellungsverfahren werden die Dämpfungslage und dann der starre Filterblock auf den Topf aufgesetzt oder aufgelegt. Die Dämpfungslage und der starre Filterblock werden in den Topf hinein bewegt.

Möglich ist, dass zunächst ein geeignetes Werkzeug die Dämpfungslage vollständig in den Topf hinein schiebt und anschließend der Filterblock aufgesetzt und in den Topf geschoben wird. In einer bevorzugten Ausgestaltung wird hingegen die Dämpfungslage auf den Topf aufgesetzt oder aufgelegt, und anschließend wird der starre Filterblock aufgesetzt und in den Topf geschoben. Während der starre Filterblock in den Topf geschoben wird, schiebt er in einer Ausgestaltung des Herstellungsverfahrens die Dämpfungslage weiter auf den Boden des Topfs zu. Daher ist es nicht erforderlich, die Dämpfungslage vorab vollständig in den Topf hineinzuschieben, was in vielen Fällen ein weiteres Werkzeug erfordern würde. Ausreichend ist, die Dämpfungslage nur teilweise in den Topf hineinzuschieben oder sogar nur auf den Topf aufzusetzen. Nach diesem Schritt wird der Filterblock in den Topf hinein bewegt, beispielsweise gedrückt oder geschoben. Die vorteilhafte Ausgestaltung des Herstellungsverfahrens ermöglicht es somit, mindestens einen Schritt beim Herstellen einzusparen, verglichen mit anderen möglichen Herstellungsverfahren. Außerdem reduziert dieses Verfahren das Risiko, dass während der Herstellung ein Teil vom Filterblock abbricht oder der Filterblock sogar zerbricht.

Gemäß dem bevorzugten Herstellungsverfahren wird zunächst die Dämpfungslage eingebracht, und anschließend wird der starre Filterblock in den Topf hinein bewegt. Bevorzugt wird der Schritt, den Filterblock in den Topf hineinzubewegen, wie folgt durchgeführt: Die Dämpfungslage, die bereits in den Topf hinein bewegt oder wenigstens auf den Topf aufgesetzt ist, bewirkt, dass der starre Filterblock bei seiner Bewegung in den Topf hinein zentriert wird. In vielen Fällen erspart diese Ausgestaltung die Notwendigkeit, den Filterblock schräg zu einer Mittelachse der Röhre des Topfs zu bewegen oder zu drehen, um ihn zu zentrieren. Diese Ausgestaltung reduziert weiter die Gefahr, dass der Filterblock während der Herstellung beschädigt wird.

Bevorzugt wird der starre Topf beim Herstellen so positioniert, dass der Boden unten und die Röhre oberhalb des Bodens angeordnet sind. Die Dämpfungslage und anschließend der Filterblock werden senkrecht oder schräg von oben auf den Topf aufgesetzt und senkrecht oder schräg nach unten bewegt. Bei dieser Ausgestaltung unterstützt die Schwerkraft die Bewegung der Dämpfungslage und insbesondere die Bewegung des Filterblocks nach unten auf den Boden zu. Möglich ist sogar, dass nur die Schwerkraft den Filterblock in den Topf hinein bewegt.

Der starre Topf, der starre Deckel, der starre Filterblock und die verformbare Dämpfungslage können an mindestens zwei unterschiedlichen Orten hergestellt werden. Sie werden dann zu einem Ort verbracht, an dem die erfindungsgemäße Filtereinheit hergestellt wird. Dieses Merkmal erleichtert es, eine Vielzahl von erfindungsgemäßen Filtereinheiten herzustellen. Bevorzugt stellt jeweils eine Fertigungsanlage eine Vielzahl von starren Töpfen, von starren Deckeln, von starren Filterblöcken und von verformbaren Dämpfungslagen her.

Optional wird nach dem Schritt, den starren Filterblock in den Topf hineinzubewegen, und vor dem Schritt, den Deckel auf den Topf aufzusetzen, ein umlaufendes Dichtungselement in den Spalt zwischen der Röhre und der Mantelfläche eingebracht. Bevorzugt wird eine flüssige oder zähflüssige Dichtmasse in den Spalt appliziert, beispielsweise von oben eingefüllt oder eingespritzt, und härtet dort aus. Möglich ist auch, dass die zähflüssige Dichtmasse im Spalt dauerelastisch bleibt. In einer Ausgestaltung wird zunächst die optionale weitere Dämpfungslage auf den Filterblock, der bereits in den Topf eingeschoben worden ist, aufgesetzt, und anschließend wird die Dichtmasse oder das Dichtungselement in den Spalt eingebracht.

Optional wird eine isolierende Schicht und / oder ein Flammschutz außen auf die Röhre des Topfs aufgebracht. Optional wird ein Griffschutz vor der einströmseitigen Öffnung aufgebracht.

Im Folgenden wird die Erfindung anhand eines Ausführungsbeispiels beschrieben. Hierbei zeigt
- Figur 1: eine schematische Querschnittsdarstellung durch eine zylinderförmige Filtereinheit;
- Figur 2: eine Abwandlung der Ausgestaltung von Figur 1, bei der der Topf und der Filterblock jeweils die Form eines Kegelstumpfs haben;
- Figur 3: eine erste Ausgestaltung der Dämpfungslage vor dem Einsetzen in den Topf;
- Figur 4: eine zweite Ausgestaltung der Dämpfungslage vor dem Einsetzen in den Topf;
- Figur 5: einen ersten Schritt bei der Herstellung der Filtereinheit: Die Dämpfungslage wird von oben auf die Röhre aufgesetzt;
- Figur 6: einen zweiten Schritt bei der Herstellung der Filtereinheit: Der Filterblock wird von oben auf die Dämpfungslage aufgesetzt und in den Topf hineingeschoben;
- Figur 7: den zweiten Schritt von Figur 6 in einer Blickrichtung von oben;
- Figur 8: einen dritten Schritt bei der Herstellung der Filtereinheit: Die Vliesscheibe wird aufgesetzt, und der Spalt zwischen dem Filterblock und dem Topf wird mit Dichtmasse verfüllt;
- Figur 9: einen vierten Schritt bei der Herstellung der Filtereinheit: Der Deckel mit dem Partikelfilter wird von oben aufgesetzt.

In dem nachfolgend beschriebenen Ausführungsbeispiel wird die Erfindung für eine Atemschutzmaske verwendet. Die Atemschutzmaske umfasst mindestens eine erfindungsgemäße Filtereinheit sowie ein Gesichtsteil, das als ein Filtereinheit-Träger fungiert. Mithilfe dieser Atemschutzmaske kann ein Mensch, beispielsweise ein Angehöriger der Feuerwehr oder der Polizei oder ein Bergmann, sich in einem mit Schadstoff belasteten Bereich aufhalten und dennoch schadstofffreie Atemluft einatmen. Dieser Mensch wird im Folgenden als "der Benutzer" der Atemschutzmaske bezeichnet. Das Gesichtsteil der Atemschutzmaske befindet sich vor dem Gesicht des Benutzers, bedeckt wenigstens Mund und Nase des Benutzers und liegt idealerweise fluiddicht am Gesicht an. Dank der Atemschutzmaske atmet der Benutzer gefilterte Atemluft ein.

Die Filtereinheit lässt sich auch in einem Atemschutzgerät verwenden. Dieses Atemschutzgerät umfasst eine Gesichtsmaske, die als ein Filtereinheit-Träger fungiert, mindestens eine erfindungsgemäße Filtereinheit sowie eine Förderereinheit für Gas, beispielsweise eine Pumpe. Diese Förderereinheit saugt Umgebungsluft an, welche durch die oder mindestens eine erfindungsgemäße Filtereinheit fließt, und fördert die Luft zu der oder mindestens einer Filtereinheit. Die oder mindestens eine erfindungsgemäße Filtereinheit filtert die eingesogene Atemluft, und der Benutzer atmet dann diese von Schadstoffen gereinigte Atemluft ein.

Die Atemschutzmaske und das Atemschutzgerät umfassen die Gesichtsmaske, die am Gesicht anliegt, sowie mindestens eine Filtereinheit, bevorzugt mindestens zwei Filtereinheiten. Die Gesichtsmaske ist aus einem verformbaren Material, um sich an die Form des Kopfes des Benutzers anzupassen und fluiddicht am Kopf anzuliegen, und umfasst eine Bebänderung und für die oder jede Filtereinheit jeweils eine Gewindefassung, in die sich eine Filtereinheit einschrauben und wieder herausschrauben lässt. Alternativ lässt sich die oder jede Filtereinheit mithilfe jeweils eines Bajonettanschlusses oder Rastverschlusses lösbar verbinden. Dank der lösbaren Verbindung kann der Benutzer eine Filtereinheit austauschen, ohne die Gesichtsmaske absetzen zu müssen.

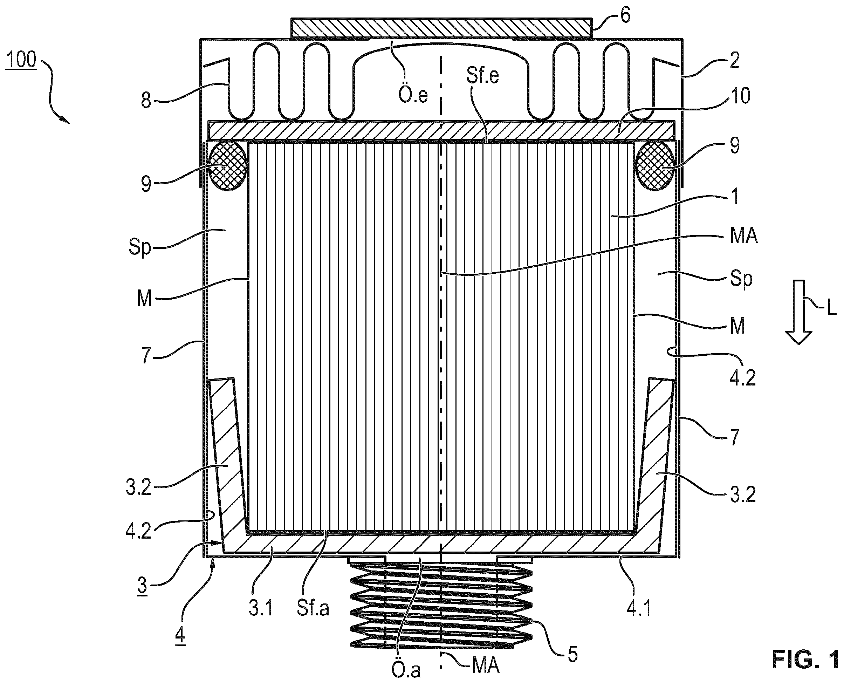

Figur 1 zeigt schematisch in einer Querschnittsdarstellung von der Seite eine Filtereinheit 100 gemäß einer Realisierungsform des Ausführungsbeispiels. Die Darstellung ist nicht notwendigerweise maßstabsgerecht.

Die Filtereinheit 100 hat im gezeigten Beispiel annähernd die Form eines Zylinders, der an einer Stirnfläche ein Gewinde 5 trägt. Die Filtereinheit 100 umfasst eine Einströmseite, die in Figur 1 oben dargestellt ist und durch welche die eingeatmete oder eingesogene Atemluft in die Filtereinheit 100 fließt, und eine Ausströmseite, die unten dargestellt ist und durch welche die Atemluft wieder aus der Filtereinheit 100 fließt. Das Gewinde 5 ist auf der Ausströmseite angeordnet, und die gefilterte Atemluft fließt durch das Gewinde 5. In Figur 1 liegt die Mittelachse MA der Filtereinheit 100 in der Zeichenebene, und die Fließrichtung, in welche Luft oder ein anderes Gasgemisch durch die Filtereinheit 100 durchströmt, ist durch einen von oben nach unten zeigenden Pfeil L dargestellt.

Die eingeatmete oder eingesogene Luft fließt durch eine einströmseitige Öffnung Ö.e auf der Einströmseite in die Filtereinheit 100, fließt durch den eigentlichen Filter 1 und tritt an der Ausströmseite durch eine ausströmseitige Öffnung Ö.a hindurch wieder aus der Filtereinheit 100 aus. Der Filter 1 filtert mindestens ein Gas aus der Atemluft heraus, während diese Atemluft den Filter 1 durchströmt. Der Filter 1 des Ausführungsbeispiels vermag nicht notwendigerweise Partikel aus der Atemluft herauszufiltern.

Im Ausführungsbeispiel ist der Filter 1 als ein starrer Filterblock ausgestaltet. Dieser starre Filterblock 1 ist unter Verwendung von Aktivkohle hergestellt und lässt sich als ein Aktivkohle-Waben-Monolith bezeichnen. Der Filter 1 kann z.B. auch aus Ca(OH)₂ hergestellt sein. Bevorzugt ist der Filterblock 1 mit einem geeigneten Mittel imprägniert. Der Filterblock 1 ist von einer Vielzahl von zueinander parallelen Kanälen durchgezogen, die sich parallel zur Fließrichtung L erstrecken und bevorzugt nicht untereinander verbunden sind. Dieser Filterblock 1 kann so wie in DE 10 2015 012 410 B4 beschrieben aufgebaut sein und insbesondere eine der dort beschriebenen Material-Zusammensetzungen aufweisen. Die Filtereinheit 100 ist so aufgebaut, dass die Atemluft, die durch die Filtereinheit 100 fließt, auch durch den Filterblock 1 fließt und keine relevante Menge den Filterblock 1 umgehen kann.

In einer Ausgestaltung, die in den Figuren gezeigt wird, ist der Filterblock 1 ein einziger starrer Körper in Form eines Zylinders. Möglich ist auch, dass der Filter 1 aus mehreren starren Scheiben besteht, die in Fließrichtung L gesehen hintereinander in einer Abfolge angeordnet sind. Diese Ausgestaltung erleichtert es, den Filter 1 aus unterschiedlichen Materialien herzustellen, sodass der Filter 1 unterschiedliche Gase herauszufiltern vermag.

Ein monolithischer Filterblock 1 aus Aktivkohle in Form eines starren Körpers oder einer Abfolge von starren Scheiben übt einen deutlich geringeren Fließwiderstand und damit Atemwiderstand aus als ein anderer Filter mit ähnlicher Filterleistung. Daher strengt die Benutzung eines solchen monolithischen Filters 1 den Benutzer weniger an als ein anderer Filter. In manchen Fällen ist ein solcher Filter leichter (geringeres Gewicht) als ein anderer Filter mit ähnlicher Filterleistung. In manchen Fällen nimmt ein monolithischer Filter weniger Platz ein als ein anderer Filter mit ähnlicher Filterleistung.

In der Realisierungsform gemäß Figur 1 hat der starre Filterblock 1 die Form eines Zylinders, der sich entlang einer Mittelachse MA erstreckt und eine Mantelfläche M, eine kreisrunde einströmseitige Stirnfläche Sf.e (oben) und eine kreisrunde ausströmseitige Stirnfläche Sf.a (unten) aufweist. Die Mittelachse MA liegt in der Zeichenebene von Figur 1. Die beiden Stirnflächen Sf.a, Sf.e sowie die Fläche, in der sich der Boden 4.1 erstreckt, stehen senkrecht auf der Zeichenebene von Figur 1. Die Einströmseite grenzt an die einströmseitige Stirnfläche Sf.e des Zylinders an, die Ausströmseite an die ausströmseitige Stirnfläche Sf.a. Die Mantelfläche M erstreckt sich zwischen diesen beiden Stirnflächen Sf.e, Sf.a.

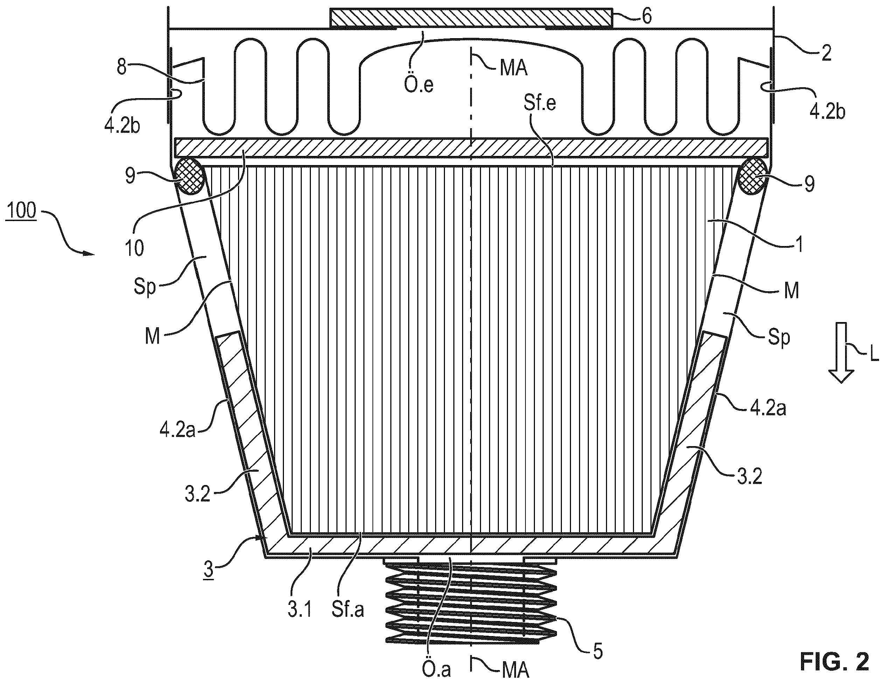

Der starre Filterblock 1 kann auch die Form eines Kegelstumpfs haben, wobei der Durchmesser sich von der einströmseitigen Stirnfläche Sf.e zu der ausströmseitigen Stirnfläche Sf.a verkleinert, vgl. Figur 2.

Ein Nachteil eines Filters, der als ein starrer Körper oder eine Abfolge von starren Scheiben ausgestaltet ist, ist der folgende: Bei einem Stoß kann ein Teil vom Filterblock 1 abbrechen, oder der Filterblock 1 kann sogar zerbrechen. Ein solcher Stoß tritt beispielsweise dann auf, wenn die Filtereinheit 100 auf einen Boden fällt oder beim Einsatz gegen einen harten Gegenstand stößt, beispielsweise wenn der Benutzer seinen Kopf dreht.

Zusätzlich zu dem Filterblock 1 umfasst die Filtereinheit 100 des Ausführungsbeispiels folgende Bestandteile:
- einen Topf 4 aus einem starren Material, wobei der Topf 4 einen Boden 4.1 und eine Röhre 4.2 umfasst,
- einen Deckel 2 aus einem starren Material, bevorzugt aus einem Metall oder einem starren Kunststoff, wobei die Form des Deckels 2 an die Form der Röhre 4.2 angepasst ist, ein Rand des Deckels 2 mit der Röhre 4.2 überlappt und mit der Röhre 4.2 stoffschlüssig verbunden ist,
- das Gewinde 5 an der Ausströmseite, wobei das Gewinde 5 aus einem starren Material hergestellt ist, bevorzugt aus einem Metall oder einem starren Kunststoff, und fest mit dem Boden 4.1 verbunden ist,
- eine einstückige Dämpfungslage 3 aus einem verformbaren Material, die nachfolgend näher beschrieben wird,
- ein optionales Dichtungselement in Form eines Rings 9 aus Dichtmasse, Schaumstoff, Kleber oder einem sonstigen Kunststoff, wobei der Ring 9 sich in einem Spalt Sp zwischen der Röhre 4.2 und der Mantelfläche M des Filterblocks 1 befindet, bevorzugt den Spalt Sp abdichtet und den Filterblock 1 im Topf 4 fixiert,
- einen optionalen Partikelfilter 8 zwischen der einströmseitigen Stirnfläche Sf.e des Filterblocks 1 und dem Deckel 2, also flussaufwärts von dem Filterblock 1,
- eine optionale verformbare Vliesscheibe 10 zwischen der einströmseitigen Stirnfläche Sf.e des Filterblocks 1 und dem Deckel 2,
- einen optionalen Flammschutz 7 in Form einer Folie oder einer Farbschicht oder Lackschicht um die Röhre 4.2 herum und
- einen optionalen Griffschutz 6 vor der einströmseitigen Öffnung Ö.e.

Der Topf 4 und der Deckel 2 bilden zusammen ein starres Gehäuse der Filtereinheit 100.

Die Filtereinheit 100 kann sowohl einen Partikelfilter 8 als auch eine Vliesscheibe 10 umfassen oder nur den Partikelfilter 8 oder nur die Vliesscheibe 10 oder weder einen Partikelfilter 8 noch eine Vliesscheibe 10.

Der optionale Partikelfilter 8 nimmt Partikel auf, während Atemluft durch den Partikelfilter 8 strömt, und reduziert dadurch das Risiko, dass Partikel in der Atemluft den Filterblock 1 erreichen und ihn zusetzen. Der Partikelfilter 8 erstreckt sich in einer Ebene, die senkrecht auf den Zeichenebenen von Figur 1 und Figur 2 steht, und ist im gezeigten Ausführungsbeispiel gewellt oder plissiert. Vorzugsweise ist der Partikelfilter 8 gefaltet und / oder gewellt. Diese Ausgestaltungen vergrößern deutlich die wirksame Oberfläche des Partikelfilters 8, ohne eine Abmessung erheblich zu vergrößern.

Die optionale Vliesscheibe 10 trägt dazu bei, eine mögliche Bewegung des starren Filterblocks 1 im Topf 4 zu dämpfen. Eine solche Relativbewegung könnte den Filterblock 1 beschädigen und / oder zu störenden Geräuschen führen. In manchen Anwendungen führt die Vliesscheibe 10 außerdem dazu, dass ein Gas, welches von der einströmseitigen Öffnung Ö.e durch die Filtereinheit hindurch zur ausströmseitigen Öffnung Ö.a strömt, stärker als ohne eine Vliesscheibe 10 in eine Richtung senkrecht oder schräg zur Mittelachse MA verteilt wird. Diese Verteilung führt zu einer gleichmäßigeren Belastung des Filterblocks 1.

Die Vliesscheibe 10 überdeckt mindestens die einströmseitige Stirnfläche Sf.e des Filterblocks 1. Bevorzugt steht sie in alle Richtungen über die einströmseitige Stirnfläche Sf.e über. Besonders bevorzugt überdeckt die Vliesscheibe 10 die gesamte Öffnung des Topfs 4, die vom Deckel 2 überdeckt wird. Bevorzugt hält das Dichtungselement 9 die Vliesscheibe 10 in einer festen Position relativ zum Topf 4. Wenn die Vliesscheibe 10 über den Filterblock 1 übersteht, reicht es aus, dass das Dichtungselement 9 den überstehenden Bereich hält, bevorzugt stoffschlüssig hält.

Falls die Filtereinheit 100 sowohl den Partikelfilter 8 als auch die Vliesscheibe 10 umfasst, befindet sich die Vliesscheibe 10 bevorzugt zwischen dem Partikelfilter 8 und dem Filterblock 1. Dank des Partikelfilters 8 erreichen weniger Partikel die Vliesscheibe 10.

Die einströmseitige Öffnung Ö.e ist mittig in den Deckel 2 eingelassen, die ausströmseitige Öffnung Ö.a mittig in den Boden 4.1.

In dem in Figur 1 gezeigten Beispiel hat der Topf 4 die Form eines oben offenen Zylinders, wobei die Öffnung des Topfs 4 vom Deckel 2 verschlossen wird. Möglich ist auch eine Abwandlung, die in Figur 2 gezeigt wird. Gemäß dieser Abwandlung hat die Röhre 4.2 einen unteren Teil 4.2a in Form eines Kegelstumpfs und einen oberen Teil 4.2b in Form einer Röhre mit gleichbleibender Querschnittsfläche, wobei der Boden 4.1 mit dem unteren Teil 4.2a verbunden ist und einen kleineren Durchmesser hat als die andere Stirnfläche des Kegelstumpfs 4.2a. Die beiden Teile 4.2a und 4.2b sind fest miteinander verbunden. Der Deckel 2 ist auf den oberen röhrenförmigen Teil 4.2b der Röhre 4.2 aufgesetzt und fluiddicht und stoffschlüssig mit diesem verbunden.

Möglich ist auch, dass der Ring 9 zwischen der Röhre 4.2 und dem Filterblock 1 fortgelassen ist. Bei dieser alternativen Ausgestaltung ist der Filterblock 1 schwimmend in dem Gehäuse 4, 2 gelagert. Das Gehäuse 4, 2 begrenzt eine mögliche Bewegung des Filterblocks 1 entlang der Mittelachse MA relativ zum Gehäuse 4, 2. Auch bei dieser Ausgestaltung dämpft die optionale Vliesscheibe 10 eine mögliche Bewegung des Filterblocks 1.

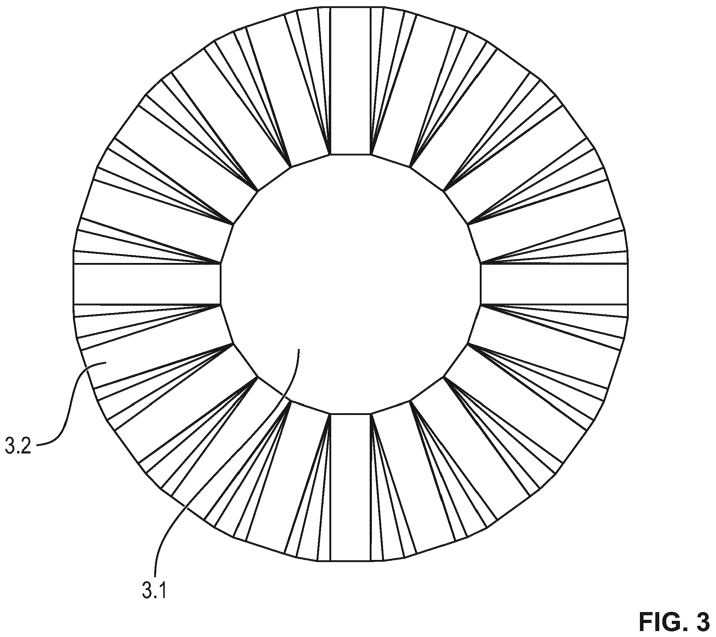

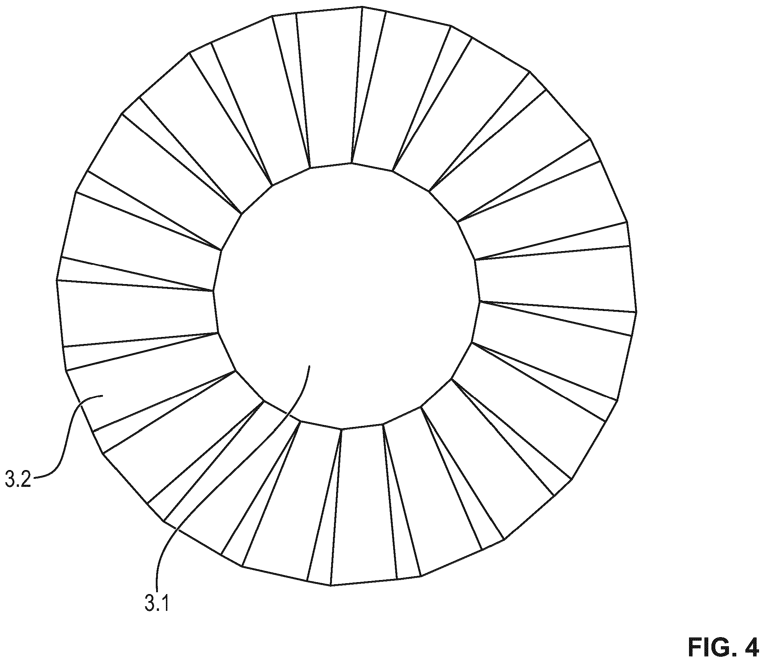

Figur 3 und Figur 4 zeigen zwei mögliche Ausgestaltungen der verformbaren einstückigen Dämpfungslage 3, und zwar bevor die Dämpfungslage 3 in den Topf 4 eingesetzt ist. In der Darstellung von Figur 3 und Figur 4 erstreckt sich die Dämpfungslage 3 in der Zeichenebene. Die Dämpfungslage 3 vermag bevorzugt aus einem Strom eines Gasgemisches, der durch die Dämpfungslage 3 fließt, Partikel herauszufiltern. Die Dämpfungslage 3 kann auf unterschiedliche Weisen realisiert sein, beispielsweise ein Gelege oder ein Gemisch aus Kunststoff oder aus Naturfasern oder Papierfasern oder Glasfasern oder Polymerfasern umfassen oder aus einer Mischung von mindestens zwei der vorgenannten Materialien oder aus mindestens einem anderen geeigneten Material hergestellt sein. Die Vliesscheibe 10 kann aus dem gleichen Material wie die Dämpfungslage 3 hergestellt sein. Bei einer Verformung absorbiert die Vliesscheibe 10 kinetische Energie.

Die Dämpfungslage 3 ist verformbar und daher bis zu einem gewissen Grad elastisch. Sowohl in der Ausgestaltung gemäß Figur 3 als auch in der Ausgestaltung gemäß Figur 4 umfasst die Dämpfungslage 3 einen kreisförmigen inneren Bereich 3.1 und einen geriffelten äußeren Bereich 3.2. Der äußere Bereich 3.2 hat die Form eines Kreisrings, der den inneren Bereich 3.1 vollständig umgibt und mit diesem umlaufend verbunden ist. Die Dämpfungslage 3 hat also die Gestalt eines Kaffeefilters. Beide Bereiche 3.1, 3.2 erstrecken sich in den Zeichenebenen von Figur 3 und Figur 4. Die Außenkontur des inneren Bereichs 3.1 kann auch die Form einer nicht kreisförmigen Ellipse aufweisen. Auch die Außenkontur des äußeren Bereichs 3.2 kann die Form einer Ellipse aufweisen.

Der Durchmesser des kreisförmigen Bodens 4.1 des Topfs 4 ist größer als der Durchmesser der ausströmseitigen Stirnfläche Sf.a des Filterblocks 1. Daher tritt zwischen der Röhre 4.2 und der Mantelfläche M der röhrenförmige Spalt Sp auf. Im Beispiel von Figur 2 verjüngt dieser Spalt Sp sich von der Einströmseite zur Ausströmseite in dem Sinne, dass der äußere Durchmesser des Spalts Sp kleiner wird. Der Durchmesser des kreisförmigen inneren Bereichs 3.1 der Dämpfungslage 3 ist mindestens so groß wie der Durchmesser der ausströmseitigen Stirnfläche Sf.a des Filterblocks 1 und kleiner als der Durchmesser des kreisförmigen Bodens 4.1. Der geriffelte äußere Bereich 3.2 befindet sich in dem röhrenförmigen Spalt Sp, vgl. Figur 1 und Figur 2. Wegen seiner Riffelung lässt sich der äußere Bereich 3.2 nach oben klappen und dabei zusammenschieben, und er vermag mehr kinetische Energie aufzunehmen als ein planer Bereich. Der äußere Bereich 3.2 dämpft daher eine mögliche Bewegung des Filterblocks 1 relativ zum Gehäuse 4, 2 in eine Richtung senkrecht oder schräg zur Mittelachse MA. Daher verringert der äußere Bereich 3.2 die Gefahr, dass der Filterblock 1 im Gehäuse 4, 2 beschädigt wird.

In der Ausführungsform, die in Figur 1 und Figur 2 gezeigt wird, bedeckt der äußere Bereich 3.2 lediglich einen Bereich der Mantelfläche M, nämlich einen Bereich, der an die ausströmseitige Stirnfläche Sf.a angrenzt. Die gleichbleibende Breite des kreisringförmigen äußeren Bereichs 3.2, also der Radius der Dämpfungslage 3 abzüglich dem Radius des kreisförmigen inneren Bereichs 3.1, ist kleiner als die Ausdehnung des Filterblocks 1 in der Fließrichtung L, also entlang der Mittelachse MA. Zwischen der Dämpfungslage 3 im Topf 4 und dem zum Deckel 2 hin zeigenden Rand des Topfs 4 bleibt daher im Spalt Sp ein Bereich frei. Dieser freigebliebene Bereich im Spalt Sp kann ganz oder teilweise von einem fixierenden und bevorzugt elastischen Element gefüllt sein. Im Beispiel von Figur 1 ist dieser Bereich im Spalt Sp teilweise von dem ringförmigen Dichtungselement 9 gefüllt. Im Beispiel von Figur 2 wird der Filterblock 1 nur durch die Dämpfungslage 3 fixiert, und zwischen dem ringförmigen Dichtungselement 9 und der Dämpfungslage 3 tritt ein Abstand auf..

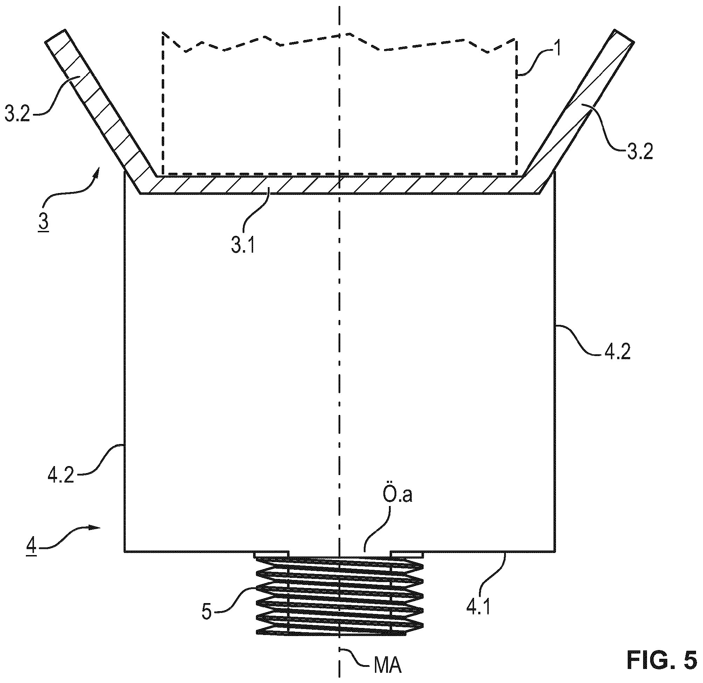

Figur 5 bis Figur 9 veranschaulichen mehrere Schritte eines bevorzugten Verfahrens, durch das die Filtereinheit 100 von Figur 1 oder Figur 2 hergestellt wird. Gleiche Bezugszeichen haben die gleichen Bedeutungen.

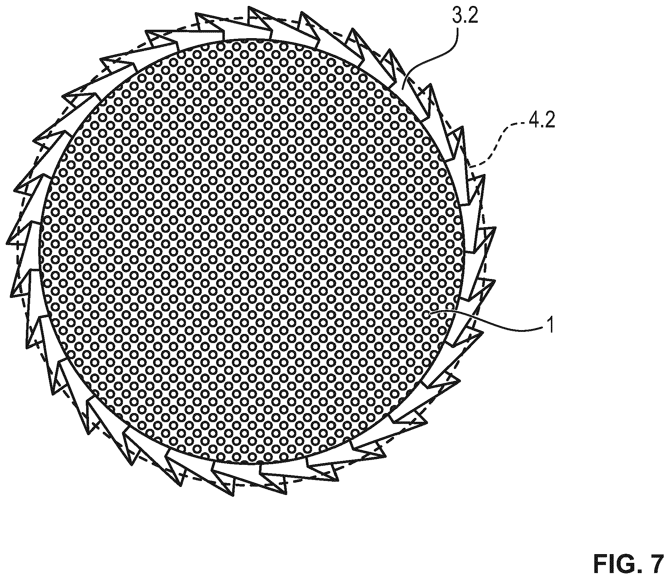

Die Blickrichtung von Figur 5, Figur 6, Figur 8 und Figur 9 ist dieselbe wie die von Figur 1 und Figur 2. Die Mittelachse MA des Filterblocks 1 und der Mittelpunkt des Bodens 4.1 stehen hingegen senkrecht auf der Zeichenebene von Figur 7.

Folgende Bestandteile werden vorgefertigt und an einem Ort, an dem die Filtereinheit 100 hergestellt werden soll, zur Verfügung gestellt:
- der Deckel 2 mit dem optionalen Griffschutz 6 und dem optionalen Partikelfilter 8,
- der Topf 4 mit dem Boden 4.1, der Röhre 4.2, dem Gewinde 5 am Boden 4.1 und in einer Ausgestaltung mit der optionalen Flammschutzfolie 7 (in Figur 5 bis Figur 9 nicht gezeigt),
- die Dämpfungslage 3 mit dem inneren Bereich 3.1 und dem äußeren geriffelten Bereich 3.2, wobei die Dämpfungslage 3 sich bevorzugt so wie in Figur 3 und Figur 4 gezeigt in einer Ebene erstreckt, sowie
- der starre Filterblock 1.

Möglich ist, diese Bestandteile an wenigstens zwei verschiedenen Orten herzustellen. Bevorzugt wird eine Abfolge von gleichartigen erfindungsgemäßen Filtereinheiten 100 hergestellt, wobei für jede Filtereinheit 100 die nachfolgend beschriebene Abfolge durchgeführt wird und die Abfolgen für die Filtereinheiten 100 bevorzugt zeitlich überlappend durchgeführt werden.

In einem vorhergehenden Schritt wird aus einem Filtermaterial eine Scheibe herausgeschnitten, und in die Scheibe wird in einen kreisringförmigen äußeren Bereich 3.2 eine umlaufende Abfolge von Riffeln eingestanzt oder auf andere Weise eingeprägt, während ein kreisförmiger innerer Bereich frei von Riffeln bleibt. Dadurch entsteht eine Dämpfungslage 3. Diese Dämpfungslage 3 hat danach beispielsweise eine Gestalt, wie sie in Figur 3 oder Figur 4 gezeigt wird.

In einem ersten Schritt wird der Topf 4 auf eine Unterlage gestellt, sodass der Boden 4.1 von unten gestützt wird. Die Dämpfungslage 3 wird nach Art eines Kaffeefilters auf den Topf 4 aufgesetzt, und zwar von der Seite, die dem Boden 4.1 und dem Gewinde 5 gegenüberliegt, also senkrecht oder schräg von oben. Gesehen in eine Blickrichtung parallel zur Mittelachse MA des Topfs 4 überlappt der innere Bereich 3.1 mit dem Boden 4.1. Figur 5 veranschaulicht diesen ersten Schritt.

Der Filterblock 1 wird anschließend dergestalt auf die Dämpfungslage 3 aufgesetzt, dass die Mittelachse MA des Filterblocks 1 mit der Mittelachse des Topfs 4 übereinstimmt und eine Stirnfläche des Filterblocks 1 zum Boden 4.1 hin zeigt. Diese zum Boden 4.1 zeigende Stirnfläche wird zu der ausströmseitigen Stirnfläche Sf.a, die andere Stirnfläche zu der einströmseitigen Stirnfläche Sf.e.

Durch das Aufsetzen wird der Filterblock 1 so auf den inneren Bereich 3.1 aufgesetzt, dass eine Stirnfläche des Filterblocks 1 an dem inneren Bereich 3.1 angrenzt. Idealerweise stimmt die Mittelachse MA des aufgesetzten Filterblocks 1 mit der Mittelachse des Topfs 4 überein. Der aufgesetzte Filterblock 1 ist in Figur 5 gestrichelt angedeutet.

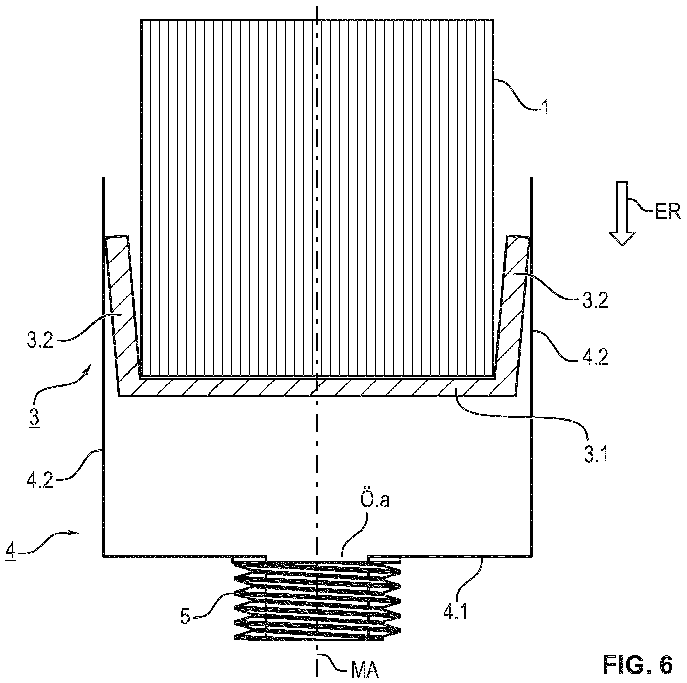

Der aufgesetzte Filterblock 1 wird in eine Einschubrichtung ER linear in den Topf 4 hineingeschoben, vgl. Figur 6. Die ausströmseitige Stirnfläche des Filterblocks 1 ist die vordere Stirnfläche. Die Einschubrichtung ER ist parallel zur Mittelachse MA. Als Folge dieser linearen Bewegung drückt der Filterblock 1 die Dämpfungslage 3 auf den Boden 4.1 zu. Der äußere Bereich 3.2 wird bei dieser Bewegung relativ zum inneren Bereich 3.1 nach oben, also vom Boden 4.1 weg, gedrückt und dank der Riffelung zusammengeschoben. Dieser Vorgang entspricht dem Vorgang, einen Kaffeefilter in eine Halterung einer Kaffeemaschine hineinzudrücken. Figur 6 und Figur 7 zeigen aus zwei verschiedenen Betrachtungsrichtungen eine Situation während des Einschiebens. In Figur 6 liegt die Einschubrichtung ER in der Zeichenebene, in Figur 7 zeigt die Einschubrichtung ER vom Betrachter weg. Bis zu einem gewissen Grad führt die Dämpfungslage 3 den Filterblock 1 beim Vorgang, den Filterblock 1 in den Topf 4 einzuschieben, und zentriert den Filterblock 1 während der Bewegung.

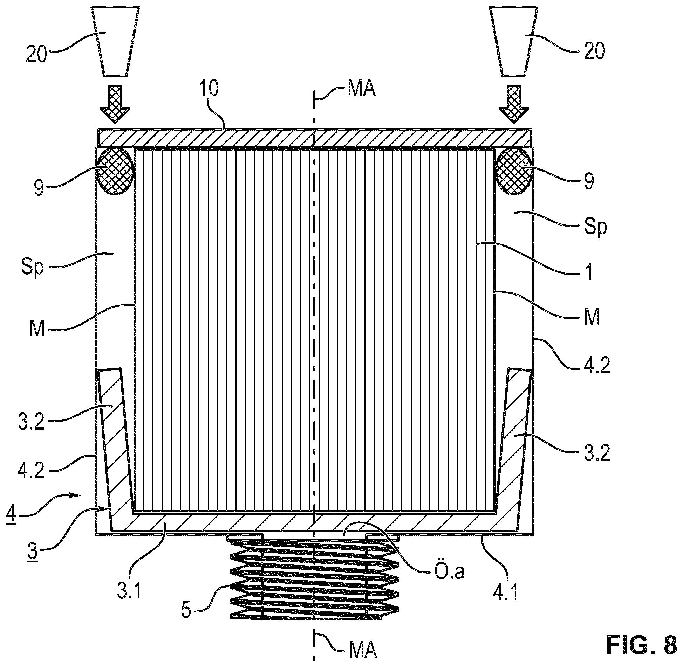

Nach Abschluss dieser linearen Bewegung hat der innere Bereich 3.1 der Dämpfungslage 3 den Boden 4.1 erreicht. Diese Situation zeigt Figur 8. In dem gezeigten Beispiel wird anschließend die optionale Vliesscheibe 10 auf die nach oben zeigende Stirnfläche des Filterblocks 1 aufgesetzt. In den Spalt Sp wird eine zunächst flüssige oder wenigstens zähflüssige Dichtmasse gefüllt. Figur 8 zeigt beispielhaft zwei Düsen 20 einer Vorrichtung, welche eine flüssige Dichtmasse von oben in den Spalt Sp füllt. Die Dichtmasse rinnt durch die optionale Vliesscheibe 10 hindurch nach unten und durchdringt hierbei den Bereich der Vliesscheibe 10, der seitlich über den Filterblock 1 übersteht.

Diese Dichtmasse härtet in einer Ausgestaltung aus und wird zum ringförmigen Dichtungselement 9, das in Figur 1 und Figur 2 gezeigt wird. Möglich ist auch, den gesamten Bereich im Spalt Sp, der nicht von dem äußeren Bereich 3.2 ausgefüllt wird, mit einer Dichtmasse zu verfüllen. Möglich ist auch, dass die Dichtmasse sich mit dem äußeren Bereich 3.2 im Spalt Sp verbindet. Optional verbindet die Dichtmasse sich auch stoffschlüssig mit dem Filterblock 1.

In einer alternativen Realisierungsform wird der gesamte Spalt Sp oder wenigstens ein Teil des Spalts Sp mit einem Kleber ausgefüllt, wobei dieser Kleber bevorzugt nicht aushärtet, sondern dauerelastisch bleibt. Bei vielen Anwendungen vermag die Realisierungsform mit dem Kleber besonders gut mechanische Energie zu absorbieren, die von außen auf die Filtereinheit 100 einwirkt.

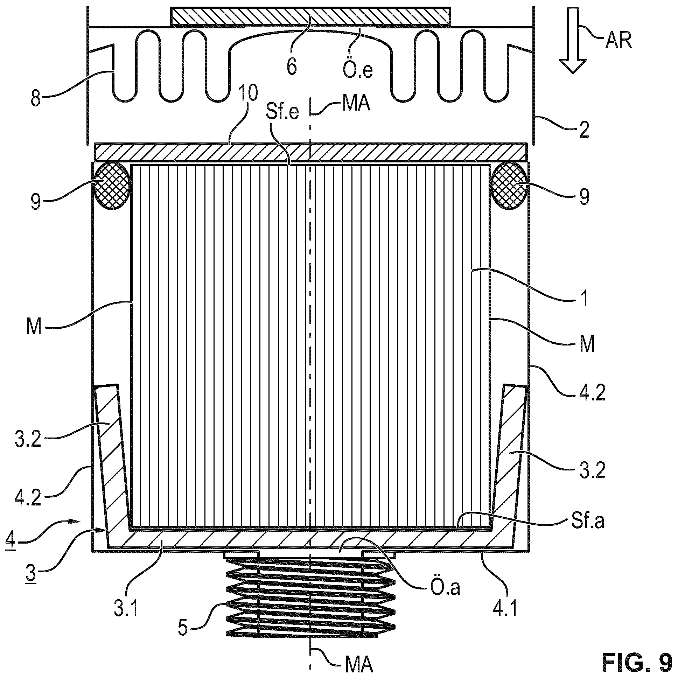

Anschließend wird der Deckel 2 mit dem Griffschutz 6 und dem Partikelfilter 8 in eine Aufsetzrichtung AR auf den Topf 4 zu bewegt und von oben auf den Topf 4 aufgesetzt, vgl. Figur 9. Der Deckel 2 wird fluiddicht mit der Röhre 4.2 verbunden. Optional wird die Flammschutzfolie 7 erst jetzt außen auf die starre Röhre 4.2 aufgeklebt. Nunmehr ist die Filtereinheit 100 fertiggestellt.

### Bezugszeichenliste

| | |
|---|---|
| 1 | starrer Filterblock aus Aktivkohle (Monolith), hat die Form eines Zylinders oder Kegelstumpfs, umfasst eine Mantelfläche M und zwei Stirnflächen Sf.e, Sf.a, erstreckt sich entlang der Mittelachse MA, ist bevorzugt von parallelen Kanälen durchgezogen |
| 2 | starrer Deckel der Filtereinheit 100, auf die Röhre 4.2 aufgesetzt, fluiddicht mit dem Topf 4 verbunden, hat die einströmseitige Öffnung Ö.e, nimmt in einer Ausgestaltung den optionalen Partikelfilter 8 auf |
| 3 | verformbare Dämpfungslage, umfasst das kreisförmige Segment 3.1 und das kreisringförmige Segment 3.2, in den Topf 4 eingesetzt |
| 3.1 | kreisförmiges Segment der Dämpfungslage 3, befindet sich nach dem Einsetzen zwischen dem Boden 4.1 und der ausströmseitigen Stirnfläche Sf.a |
| 3.2 | kreisringförmiges Segment der Dämpfungslage 3, befindet sich nach dem Einsetzen zwischen der Röhre 4.2 und der Mantelfläche M |
| 4 | starrer Topf der Filtereinheit 100, umfasst die Röhre 4.2 und den Boden 4.1, umgibt den Filterblock 1 |
| 4.1 | kreisförmiger Boden des Topfs 4, fest mit dem Gewinde 5 verbunden, hat die ausströmseitige Öffnung Ö.a |
| 4.2 | Röhre des Topfs 4, fest mit dem Boden 4.1 verbunden, umgibt die Mantelfläche M, hat in einer Ausgestaltung die Form einer zylindrischen Röhre und umfasst in einer anderen Ausgestaltung die Teile 4.2a und 4.2b |
| 4.2a | unterer Teil der Röhre 4.2, hat die Form eines Kegelstumpfs, fest mit dem Boden 4.1 verbunden |
| 4.2b | röhrenförmiger oberer Teil der Röhre 4.2, vom Deckel 2 umgeben |
| 5 | starres Gewinde, fest mit dem Boden 4.1 verbunden, überlappt mit der ausströmseitigen Öffnung Ö.a, fungiert als eine Koppeleinheit mit einem Filtereinheits-Träger |
| 6 | optionaler Griffschutz vor der einströmseitigen Öffnung Ö.e, mit dem Deckel 2 verbunden |
| 7 | optionale Flammschutzfolie, außen auf die starre Röhre 4.2 aufgeklebt |
| 8 | optionaler gewellter oder plissierender Partikelfilter aus Papier hinter der einströmseitigen Öffnung Ö.e, befindet sich zwischen der einströmseitigen Stirnfläche Sf.e und dem Deckel 2 oder ist in den Deckel 2 integriert |
| 9 | optionales Dichtungselement aus einer Dichtmasse, zwischen der Röhre 4.2 und der Mantelfläche M des Filterblocks 1, hat die Form eines Rings |
| 10 | optionale Vliesscheibe zwischen dem Partikelfilter 8 und dem starren Filterblock 1 |
| 20 | Düsen einer Vorrichtung, welche die flüssige Dichtmasse 9 in den Spalt Sp zwischen der Röhre 4.2 und der Mantelfläche M füllt |
| AR | Aufsetzrichtung, in welche der Deckel 2 auf den Topf 4 zu bewegt und auf den Topf 4 aufgesetzt wird |
| ER | Einschubrichtung, in welche der Filterblock 1 in den Topf 4 hineingeschoben wird und bevorzugt die Dämpfungslage 3 in den Topf 4 hinein drückt |
| L | Richtung, in welche eingeatmete oder eingesogene Atemluft die Filtereinheit 100 durchströmt |
| M | Mantelfläche des zylinderförmigen Filterblocks 1, von der Röhre 4.2 umgeben |
| MA | Mittelachse des zylinderförmigen Filterblocks 1 und des Topfs 4 |
| Ö.a | ausströmseitige Öffnung, im Boden 4.1 angeordnet |
| Ö.e | einströmseitige Öffnung, mittig im Deckel 2 angeordnet, durch den Griffschutz 6 geschützt |
| Sf.a | ausströmseitige Stirnfläche des zylinderförmigen Filterblocks 1, steht senkrecht auf der Mittelachse MA, grenzt an den Boden 4.1 an, fungiert beim Schritt, den Filterblock 1 in den Topf 4 anzusetzen, als vordere Stirnfläche |
| Sf.e | einströmseitige Stirnfläche des zylinderförmigen Filterblocks 1, steht senkrecht auf der Mittelachse MA, grenzt an den Deckel 2 oder an den Partikelfilter 8 oder an die Vliesscheibe 10 an |
| Sp | röhrenförmiger Spalt zwischen der Röhre 4.2 und der Mantelfläche M, nimmt den äußeren Bereich 3.2 und optional den Ring 9 auf |

## Patentansprüche

1. Filtereinheit (100) umfassend
- einen Topf (4) mit einem Boden (4.1) und einer Röhre (4.2),
- einen Deckel (2), bevorzugt einen starren Deckel (2),
- einen starren Filterblock (1) mit zwei Stirnflächen (Sf.a, Sf.e) und einer Mantelfläche (M) zwischen den Stirnflächen (Sf.a, Sf.e) und
- eine einstückige verformbare Dämpfungslage (3),
wobei der Topf (4) und der Deckel (2) zusammen ein Gehäuse bilden, welches den Filterblock (1) umgibt, bevorzugt ein starres Gehäuse, wobei zwischen der Röhre (4.2) und der Mantelfläche (M) ein Spalt (Sp) auftritt,
wobei der Filterblock (1) dazu ausgestaltet ist, aus einem Gasgemisch, welches durch den Filterblock (1) strömt, mindestens ein Gas und / oder Partikel herauszufiltern,
wobei die verformbare Dämpfungslage (3)
- einen ebenen inneren Bereich (3.1) und
- einen geriffelten äußeren Bereich (3.2)
umfasst,
wobei sich der innere Bereich (3.1) der Dämpfungslage (3)
- zwischen der einen Stirnfläche (Sf.a) des Filterblocks (1) und dem Boden (4.1) des Topfs (4) befindet und
- die Form eines Kreises oder einer Ellipse oder eines n-Ecks aufweist, wobei der äußere Bereich (3.2) der verformbaren Dämpfungslage (3)
- den inneren Bereich (3.1) nach Art eines Kreisrings umgibt,
- mit dem inneren Bereich (3.1) umlaufend verbunden ist und
- sich im Spalt (Sp) befindet, bevorzugt vollständig, und
wobei die andere Stirnfläche (Sf.e) des Filterblocks (1) an den Deckel (2) angrenzt.

2. Filtereinheit (100) nach Anspruch 1,
**dadurch gekennzeichnet, dass**
die Filtereinheit (100) dazu ausgestaltet ist, dass ein Gasgemisch in eine Fließrichtung (L) durch den Filterblock (1) hindurchfließt,
wobei die Breite des äußeren Bereichs (3.2) kleiner als die Ausdehnung des Filterblocks (1) entlang der Fließrichtung (L) ist.

3. Filtereinheit (100) nach Anspruch 2,
**dadurch gekennzeichnet, dass**
in dem Spalt (Sp) ein umlaufendes Dichtungselement (9) angeordnet ist, wobei bevorzugt zwischen dem Dichtungselement (9) und der Dämpfungslage (3) ein Abstand auftritt.

4. Filtereinheit (100) nach einem der vorhergehenden Ansprüche,
**dadurch gekennzeichnet, dass**
der innere Bereich (3.1) der Dämpfungslage (3) sich zwischen der angrenzenden Stirnfläche (Sf.a) des Filterblocks (1) und dem Boden (4.1) des Topfs (4) befindet.

5. Filtereinheit (100) nach einem der vorhergehenden Ansprüche,
**dadurch gekennzeichnet, dass**
in den Boden (4.1) des Topfs (4) eine Koppeleinheit (5) eingelassen ist,
wobei die Koppeleinheit (5) dazu ausgestaltet ist, die Filtereinheit (100) lösbar mit einem Filtereinheit-Träger, insbesondere mit einer Gesichtsmaske, zu verbinden.

6. Filtereinheit (100) nach einem der vorhergehenden Ansprüche,
**dadurch gekennzeichnet, dass**
die maximale Abmessung des inneren Bereichs (3.1) der Dämpfungslage (3)
- größer als die maximale Abmessung der angrenzenden Stirnfläche (Sf.a) des Filterblocks (1) und
- höchstens so groß wie, bevorzugt kleiner als die maximale Abmessung des Bodens (4.1) des Topfs (4)
ist.

7. Filtereinheit (100) nach einem der vorhergehenden Ansprüche,
**dadurch gekennzeichnet, dass**
die Filtereinheit (100) einen Partikelfilter (8) umfasst,
wobei der Partikelfilter (8)
- zwischen dem Deckel (2) und derjenigen Stirnfläche (Sf.e) des Filterblocks (1), die zum Deckel (2) hin zeigt, angeordnet ist oder
- in den Deckel (2) integriert ist und
wobei ein Abstand zwischen dem Partikelfilter (8) und der Dämpfungslage (3) auftritt.

8. Filtereinheit (100) nach einem der vorhergehenden Ansprüche,
**dadurch gekennzeichnet, dass**
die Filtereinheit (100) eine weitere verformbare Dämpfungslage, insbesondere eine Vliesscheibe (10), umfasst,
wobei die weitere Dämpfungslage (10)
- in den Deckel (2) integriert ist oder
- zwischen dem Deckel (2) und derjenigen Stirnfläche (Sf.e) des Filterblocks (1), die zum Deckel (2) hin zeigt, angeordnet ist,
wobei ein Abstand zwischen der weiteren Dämpfungslage (10) und der Dämpfungslage (3) auftritt und
wobei bevorzugt der Filterblock (1) zwischen dem inneren Bereich (3.1) der Dämpfungslage (3) und der weiteren Dämpfungslage (10) angeordnet ist.

9. Atemschutzgerät umfassend
- mindestens eine Filtereinheit (100) nach einem der vorhergehenden Ansprüche und
- einen Filtereinheits-Träger,
wobei der Filtereinheits-Träger dazu ausgestaltet ist, an einem Kopf eines Menschen anzuliegen, und
wobei die oder jede Filtereinheit (100) lösbar mit dem Filtereinheits-Träger verbunden oder verbindbar ist.

10. Verfahren zur Herstellung einer Filtereinheit (100),
wobei
- ein Topf (4) mit einem Boden (4.1) und einer Röhre (4.2),
- ein Deckel (2), bevorzugt ein starrer Deckel (2),
- ein starrer Filterblock (1) mit zwei Stirnflächen (Sf.a, Sf.e) und einer Mantelfläche (M) und
- eine einstückige verformbare Dämpfungslage (3) in Form eines ebenen Gegenstands
bereitgestellt werden,
wobei der starre Filterblock (1) dazu ausgestaltet ist, aus einem Gasgemisch, welches durch den Filterblock (1) strömt, mindestens ein Gas und / oder Partikel herauszufiltern, und
wobei das Verfahren die Schritte umfasst, dass
in einen äußeren Bereich (3.2) der verformbaren Dämpfungslage (3) Riffeln eingestanzt werden, sodass ein geriffelter äußerer Bereich (3.2) erzeugt wird, der einen ebenen inneren Bereich (3.1) nach Art eines Kreisrings umgibt, wobei der innere Bereich (3.1) die Form eines Kreises oder einer Ellipse oder eines n-Ecks aufweist,
die verformbare Dämpfungslage (3) auf den Topf (4) aufgesetzt oder aufgelegt wird,
die verformbare Dämpfungslage (3) anschließend dergestalt in das Innere des Topfs (4) bewegt wird, dass
- der innere Bereich (3.1) der Dämpfungslage (3) auf den Boden (4.1) des Topfs (4) zu bewegt wird und
- der geriffelte äußere Bereich (3.2) an die Röhre (4.2) des Topfs (4) angrenzt,
der starre Filterblock (1) dergestalt in das Innere des Topfs (4) bewegt wird, dass
- der innere Bereich (3.1) der Dämpfungslage (3) sich zwischen dem Boden (4.1) des Topfs (4) und einer Stirnfläche (Sf.a) des Filterblocks (1) befindet und
- der äußere Bereich (3.2) sich in einem Spalt (Sp) befindet, wobei der Spalt (Sp) zwischen der Röhre (4.2) des Topfs (4) und der Mantelfläche (M) des Filterblocks (1) auftritt, und
der Deckel (2) dergestalt mit dem Topf (4) verbunden wird, dass der Deckel (2) und der Topf (4) zusammen ein Gehäuse bilden, welches den Filterblock (1) und die Dämpfungslage (3) umgibt, bevorzugt ein starres Gehäuse.

11. Verfahren nach Anspruch 10,
**dadurch gekennzeichnet, dass**
der Schritt, den starren Filterblock (1) in das Innere des Topfs (4) zu bewegen, den Schritt bewirkt, die verformbare Dämpfungslage (3) in das Innere des Topfs (4) zu bewegen.

12. Verfahren nach Anspruch 10 oder Anspruch 11,
**dadurch gekennzeichnet, dass**
der Schritt, den starren Filterblock (1) in das Innere des Topfs (4) zu bewegen, dergestalt durchgeführt wird, dass
durch die Dämpfungslage (3) der Filterblock (1) bei der Bewegung in eine zentrierte Lage relativ zum Topf (4) geführt wird.

## Claims

1. Filter unit (100) comprising
- a pot (4) having a base (4.1) and a tube (4.2),
- a lid (2), preferably a rigid lid (2),
- a rigid filter block (1) having two end faces (Sf.a, Sf.e) and a lateral face (M) between the end faces (Sf.a, Sf.e), and
- a single-piece deformable absorbing layer (3),
wherein the pot (4) and the lid (2) together form a housing, preferably a rigid housing, which surrounds the filter block (1),
wherein there is a gap (Sp) between the tube (4.2) and the lateral face (M),
wherein the filter block (1) is designed to filter out at least one gas and/or particle from a gas mixture which flows through the filter block (1),
wherein the deformable absorbing layer (3) comprises
- a smooth inner region (3.1) and
- a corrugated outer region (3.2),
wherein the inner region (3.1) of the absorbing layer (3)
- is located between one end face (Sf.a) of the filter block (1) and the base (4.1) of the pot (4) and
- is in the shape of a circle or an ellipse or an n-gon,
wherein the outer region (3.2) of the deformable absorbing layer (3)
- surrounds the inner region (3.1) in the manner of a circular ring,
- is circumferentially connected to the inner region (3.1) and
- is located in the gap (Sp), preferably completely, and
wherein the other end face (Sf.e) of the filter block (1) is adjacent to the lid (2).

2. Filter unit (100) according to claim 1,
**characterized in that**
the filter unit (100) is designed so that a gas mixture flows through the filter block (1) in a flow direction (L),
wherein the width of the outer region (3.2) is smaller than the extent of the filter block (1) along the flow direction (L).

3. Filter unit (100) according to claim 2,
**characterized in that**
a circumferential sealing element (9) is arranged in the gap (Sp),
wherein there is preferably a spacing between the sealing element (9) and the absorbing layer (3).

4. Filter unit (100) according to any of the preceding claims,
**characterized in that**
the inner region (3.1) of the absorbing layer (3) is located between the adjacent end face (Sf.a) of the filter block (1) and the base (4.1) of the pot (4).

5. Filter unit (100) according to any of the preceding claims, **characterized in that**
a coupling unit (5) is set into the base (4.1) of the pot (4),
wherein the coupling unit (5) is designed to connect the filter unit (100) to a filter unit carrier, in particular to a face mask, so as to be detachable.

6. Filter unit (100) according to any of the preceding claims,
**characterized in that**
the maximum dimension of the inner region (3.1) of the absorbing layer (3) is
- larger than the maximum dimension of the adjacent end face (Sf.a) of the filter block (1) and
- at most as large as, preferably smaller than, the maximum dimension of the base (4.1) of the pot (4).

7. Filter unit (100) according to any of the preceding claims,
**characterized in that**
the filter unit (100) comprises a particle filter (8),
wherein the particle filter (8)
- is arranged between the lid (2) and the end face (Sf.e) of the filter block (1), which end face faces the lid (2) or
- is integrated into the lid (2) and
wherein there is a spacing between the particle filter (8) and the absorbing layer (3).

8. Filter unit (100) according to any of the preceding claims,
**characterized in that**
the filter unit (100) comprises a further deformable absorbing layer (10), in particular a nonwoven fabric disk,
wherein the further absorbing layer (10)
- is integrated into the lid (2) or
- is arranged between the lid (2) and the end face (Sf.e) of the filter block (1), which end face faces the lid (2),
wherein there is a spacing between the further absorbing layer (10) and the absorbing layer (3) and
wherein the filter block (1) is preferably arranged between the inner region (3.1) of the absorbing layer (3) and the further absorbing layer (10).

9. Respiratory equipment comprising
- at least one filter unit (100) according to any of the preceding claims and
- a filter unit carrier,
wherein the filter unit carrier is designed to rest on a head of a person, and
wherein the or each filter unit (100) is connected or connectible to the filter unit carrier so as to be detachable.

10. Method for producing a filter unit (100),
wherein
- a pot (4) having a base (4.1) and a tube (4.2),
- a lid (2), preferably a rigid lid (2),
- a rigid filter block (1) having two end faces (Sf.a, Sf.e) and a lateral face (M) and
- a single-piece deformable absorbing layer (3) in the form of a smooth object
are provided,
wherein the rigid filter block (1) is designed to filter out at least one gas and/or particle from a gas mixture which flows through the filter block (1), and
wherein the method comprises the steps of
stamping corrugations into an outer region (3.2) of the deformable absorbing layer (3) so that a corrugated outer region (3.2) is produced which surrounds, in the manner of a circular ring, a smooth inner region (3.1),
wherein the inner region (3.1) is in the shape of a circle or an ellipse or an n-gon,
placing or putting the deformable absorbing layer (3) on the pot (4),
subsequently moving the deformable absorbing layer (3) into the inside of the pot (4) in such a way that
- the inner region (3.1) of the absorbing layer (3) is moved toward the base (4.1) of the pot (4) and
- the corrugated outer region (3.2) is adjacent to the tube (4.2) of the pot (4),
moving the rigid filter block (1) into the inside of the pot (4) in such a way that
- the inner region (3.1) of the absorbing layer (3) is located between the base (4.1) of the pot (4) and an end face (Sf.a) of the filter block (1) and
- the outer region (3.2) is located in a gap (Sp), wherein the gap (Sp) is between the tube (4.2) of the pot (4) and the lateral face (M) of the filter block (1), and
connecting the lid (2) to the pot (4) in such a way that the lid (2) and the pot (4) together form a housing, preferably a rigid housing, which surrounds the filter block (1) and the absorbing layer (3).

11. Method according to claim 10,
**characterized in that**
the step of moving the rigid filter block (1) into the inside of the pot (4) causes the step of moving the deformable absorbing layer (3) into the inside of the pot (4).

12. Method according to claim 10 or claim 11,
**characterized in that**
the step of moving the rigid filter block (1) into the inside of the pot (4) is carried out such that,
during the movement, the absorbing layer (3) guides the filter block (1) into a centered position relative to the pot (4).

## Revendications

1. Unité de filtrage (100), comprenant
- un récipient (4) comportant un fond (4,1) et un tube (4,2),
- un bol (2), de préférence un couvercle rigide (2),
- un bloc de filtrage (1) rigide comportant deux faces frontales (Sf.a, Sf.e) et une face enveloppante (M) entre les faces frontales (Sf.a, Sf.e) et
- une couche d'amortissement (3) déformable d'un seul tenant,
dans laquelle le bol (4) et le couvercle (2) forment ensemble un boîtier qui entoure le bloc de filtrage (1), de préférence un boîtier rigide,
dans laquelle un interstice (Sp) se forme entre le tube (4,2) et la face enveloppante (M),
dans laquelle le bloc de filtrage (1) est conçu pour filtrer, à partir d'un mélange gazeux, qui s'écoule à travers le bloc de filtrage (1), au moins un gaz et/ou des particules,
dans laquelle la couche d'amortissement (3) déformable comprend
- une zone interne (3,1) plane et
- une zone externe (3,2) striée,
dans laquelle la zone interne (3,1) de la couche d'amortissement (3)
- se trouve entre l'une des faces frontales (Sf.a) du bloc de filtrage (1) et le fond (4,1) du bol (4) et
- présente la forme d'un cercle ou d'une ellipse ou d'un polygone à n coins,
dans laquelle la zone externe (3,2) de la couche d'amortissement (3) déformable
- entoure la zone interne (3,1) à la manière d'un anneau circulaire,
- est reliée de manière périphérique à la zone interne (3,1) et
- se trouve dans l'interstice (Sp), de préférence entièrement, et
dans laquelle l'autre face frontale (Sf.e) du bloc de filtrage (1) est adjacente au couvercle (2).

2. Unité de filtrage (100) selon la revendication 1,
**caractérisée en ce que**
l'unité de filtrage (100) est conçue de telle sorte qu'un mélange gazeux s'écoule à travers le bloc de filtrage (1) dans un sens d'écoulement (L),
dans laquelle la largeur de la zone externe (3,2) est inférieure à l'étendue du bloc de filtrage (1) le long du sens d'écoulement (L).

3. Unité de filtrage (100) selon la revendication 2,
**caractérisée en ce que**
un élément d'étanchéité (9) périphérique est agencé dans l'interstice (Sp),
dans laquelle une distance se forme de préférence entre l'élément d'étanchéité (9) et la couche d'amortissement (3).

4. Unité de filtrage (100) selon l'une des revendications précédentes,
**caractérisée en ce que**
la zone interne (3,1) de la couche d'amortissement (3) se trouve entre la face frontale (Sf.a) adjacente du bloc de filtrage (1) et le fond (4,1) du bol (4).

5. Unité de filtrage (100) selon l'une des revendications précédentes,
**caractérisée en ce que**
une unité de couplage (5) est encastrée dans le fond (4,1) du bol (4),
dans laquelle l'unité de couplage (5) est conçue pour relier de manière amovible l'unité de filtrage (100) à un support d'unité de filtrage, en particulier à un masque facial.

6. Unité de filtrage (100) selon l'une des revendications précédentes,
**caractérisée en ce que**
la dimension maximale de la zone interne (3,1) de la couche d'amortissement (3) est
- supérieure à la dimension maximale de la face frontale (Sf.a) adjacente du bloc de filtrage (1) et
- au plus aussi haute que, de préférence inférieure à la dimension maximale du fond (4,1) du bol (4).

7. Unité de filtrage (100) selon l'une des revendications précédentes,
**caractérisée en ce que**
l'unité de filtrage (100) comprend un filtre à particules (8),
dans laquelle le filtre à particules (8)
- est agencé entre le couvercle (2) et la face frontale (Sf.e) du bloc de filtrage (1) qui est tournée vers le couvercle (2), ou
- est intégré au couvercle (2) et
dans laquelle une distance se forme entre le filtre à particules (8) et la couche d'amortissement (3).

8. Unité de filtrage (100) selon l'une des revendications précédentes,
**caractérisée en ce que**
l'unité de filtrage (100) comprend une couche d'amortissement déformable supplémentaire, notamment un disque en non-tissé (10),
dans laquelle la couche d'amortissement supplémentaire (10)
- est intégrée dans le couvercle (2) ou
- est agencée entre le couvercle (2) et la face frontale (Sf.e) du bloc de filtrage (1) qui est tournée vers le couvercle (2),
dans laquelle une distance est formée entre la couche d'amortissement supplémentaire (10) et la couche d'amortissement (3) et
dans laquelle de préférence le bloc de filtrage (1) est agencé entre la zone interne (3,1) de la couche d'amortissement (3) et la couche d'amortissement supplémentaire (10).

9. Appareil de protection respiratoire comprenant
- au moins une unité de filtrage (100) selon l'une des revendications précédentes, et
- un support d'unité de filtrage,
dans laquelle le support d'unité de filtrage est conçu pour s'appuyer contre la tête d'une personne, et
dans laquelle la ou chaque unité de filtrage (100) est reliée ou peut être reliée de manière amovible au support d'unité de filtrage.

10. Procédé de fabrication d'une unité de filtrage (100),
dans lequel
- un bol (4) comportant un fond (4,1) et un tube (4,2),
- un couvercle (2), de préférence un couvercle rigide (2),
- un bloc de filtrage (1) rigide comportant deux faces frontales (Sf.a, Sf.e) et une face enveloppante (M), et
- une couche d'amortissement (3) déformable d'un seul tenant sous la forme d'un objet plan
sont fournis,
dans lequel le bloc de filtrage (1) rigide est conçu pour filtrer, à partir d'un mélange gazeux, qui s'écoule à travers le bloc de filtrage (1), au moins un gaz et/ou des particules, et
dans lequel le procédé comprend les étapes selon lesquelles
des stries sont estampées dans une zone externe (3,2) de la couche d'amortissement (3) déformable, de manière à créer une zone externe (3,2) striée qui entoure une zone interne (3,1) plane à la manière d'un anneau circulaire,
dans lequel la zone interne (3,1) présente la forme d'un cercle, d'une ellipse ou d'un polygone à n coins,
la couche d'amortissement (3) déformable est placée ou posée sur le bol (4),
la couche d'amortissement (3) déformable est ensuite déplacée à l'intérieur du bol (4) de telle sorte que
- la zone interne (3,1) de la couche d'amortissement (3) est déplacée vers le fond (4,1) du bol (4) et
- la zone externe (3,2) striée est adjacente au tube (4,2) du bol (4),
le bloc de filtrage (1) rigide est déplacé à l'intérieur du bol (4) de telle sorte que
- la zone interne (3,1) de la couche d'amortissement (3) se trouve entre le fond (4,1) du bol (4) et une face frontale (Sf.a) du bloc de filtrage (1) et
- la zone externe (3,2) se trouve dans un interstice (Sp), dans lequel l'interstice (Sp) se forme entre le tube (4,2) du bol (4) et la face enveloppante (M) du bloc de filtrage (1), et
le couvercle (2) est relié au bol (4) de telle sorte que le couvercle (2) et le bol (4) forment ensemble un boîtier qui entoure le bloc de filtrage (1) et la couche d'amortissement (3), de préférence un boîtier rigide.

11. Procédé selon la revendication 10,
**caractérisé en ce que**
l'étape consistant à déplacer le bloc de filtrage (1) rigide à l'intérieur du bol (4), laquelle étape a pour effet de déplacer la couche d'amortissement (3) déformable à l'intérieur du bol (4).

12. Procédé selon la revendication 10 ou la revendication 11,
**caractérisé en ce que**
l'étape consistant à déplacer le bloc de filtrage (1) rigide à l'intérieur du bol (4) est réalisée de telle sorte que
grâce à la couche d'amortissement (3), le bloc de filtrage (1) est guidé vers une position centrée par rapport au bol (4) lors de son déplacement.
